# FASCICULE DE BREVET EUROPEEN

(11) **EP 2 099 848 B1**
(45) Date de publication et mention de la délivrance du brevet: **25.08.2010**
(21) Numéro de dépôt: 07871836.8
(22) Date de dépôt: 12.12.2007
(51) Int. Cl.: C08J 3/24, C08K 3/00, C08K 3/22, C08K 3/34, C08K 3/36, C08K 13/02, H01B 3/46, H01B 7/295

(54) **COMPOSITIONS POLYORGANOSILOXANES VULCANISABLES A CHAUD UTILISABLES NOTAMMENT POUR LA FABRICATION DE FILS OU CABLES ELECTRIQUES**
HEISS VULKANISIERBARE POLYORGANOSILOXAN-ZUSAMMENSETZUNGEN ZUR VERWENDUNG INSBESONDERE BEI DER HERSTELLUNG ELEKTRISCHER DRÄHTE ODER KABEL
HOT-VULCANISABLE POLYORGANOSILOXANE COMPOSITIONS ESSENTIALLY USED IN THE PRODUCTION OF ELECTRIC WIRES OR CABLES

(30) Priorité: 14.12.2006 FR 0610905
(43) Date de publication de la demande: 16.09.2009
(73) Titulaire: Bluestar Silicones France, 69486 Lyon Cedex 03 (FR)
(72) Inventeur: GEORGES, Catherine, F-69290 Saint Genis-Les-Ollieres (FR)
(86) Numéro de dépôt international: PCT/FR2007/002042
(87) Numéro de publication internationale: WO 2008/087283

(56) Documents cités:
- EP-A- 0 558 385
- EP-A1- 0 467 800
- WO-A-01/34696
- WO-A-01/34705
- WO-A-2004/064081

## Description

La présente invention concerne des compositions polyorganosiloxanes vulcanisables à chaud en élastomères silicones, c'est-à-dire vulcanisables à des températures de la matière généralement comprises entre 100° et 200°C et pouvant au besoin aller jusqu'à 250°C.

L'invention concerne encore l'utilisation de ces compositions pour notamment la réalisation par extrusion des enveloppes ou isolants primaires entrant dans la constitution de fils ou câbles électriques protégés contre l'incendie.

Par l'expression "fils ou câbles électriques protégés contre l'incendie", on entend définir des fils ou câbles électriques qui doivent garantir un comportement au feu de haute qualité en termes, au moins, de cohésion des cendres et d'opacité des fumées. Les caractéristiques que doivent présenter les fils ou câbles électriques protégés contre l'incendie, font l'objet de réglementations légales dans de nombreux pays et des normalisations rigoureuses ont été établies.

Un câble électrique est constitué, selon la technique antérieure connue, d'un ou plusieurs monoconducteur(s) (en général à base de Cu ou d'Al) ; chacun de ces monoconducteurs est protégé par une enveloppe ou isolant primaire fait d'une ou plusieurs couche(s) concentrique(s) à base d'élastomère silicone. Autour de cette enveloppe ou de ces enveloppes (dans le cas d'un câble à plusieurs monoconducteurs) est (sont) prévu(s) un ou plusieurs élément(s) de remplissage et/ou un ou plusieurs élément(s) de renfort à base notamment de fibres de verre et/ou de fibres minérales. Puis on procède ensuite au gainage extérieur pouvant comprendre une ou plusieurs gaine(s). Dans le cas d'un câble électrique à plusieurs monoconducteurs, le (ou les) élément(s) de remplissage et/ou le (ou les) élément(s) de renfort, qui est (sont) disposé(s) autour des monoconducteurs (équipés chacun de son isolant primaire), constitue(nt) une enveloppe commune à l'ensemble des monoconducteurs. Bien que l'élastomère silicone entrant dans la constitution des câbles soit essentiellement le matériau constitutif du (ou des) isolant(s) primaire(s), il peut être présent aussi, en proportions variables : dans le (ou les) élément(s) de remplissage et/ou dans le (ou les) élément(s) de renfort (constituant l'enveloppe commune dans le cas d'un câble à plusieurs monoconducteurs) ; et/ou dans la (ou les) gaine(s) extérieure(s).

Le nombre de couche(s) concentrique(s) à base d'élastomère silicone, constituant l'enveloppe ou isolant primaire de chaque monoconducteur, et l'épaisseur de paroi de chaque couche va dépendre essentiellement des exigences imposées pour le maintien du fonctionnement selon les dispositions des normes. De manière générale, il est souhaitable d'obtenir un pareil fonctionnement moyennant l'utilisation d'une ou de deux couches ayant chacune, de façon appropriée, une épaisseur égale à au moins 0,5 mm et, de préférence, à au moins 0,8 mm.

Une norme importante relative aux essais de tenue au feu, qu'il convient de satisfaire, est la norme internationale CEI 1034, parties 1 et 2 (CEI est l'abréviation de l'expression : Commission Electrotechnique Internationale), qui concerne la mesure de l'opacité des fumées dégagées par des câbles électriques brûlant dans des conditions définies. Dans cet essai, on mesure la transmission de lumière dans une petite chambre de 27 m³ obscurcie par les fumées produites en faisant brûler des tronçons de câbles sous l'action d'une flamme d'alcool installée dans des conditions définies.

Les compositions polyorganosiloxanes vulcanisables à chaud en élastomères silicones sont déjà très largement utilisées en câblerie et pour la réalisation d'accessoires de câbles d'énergie, du fait notamment de leurs excellentes propriétés diélectriques, leur stabilité thermique aux basses et hautes températures, leur résistance aux conditions atmosphériques ou environnantes d'utilisation et leur élasticité.

Elles sont en général réticulées, en particulier à l'aide d'un péroxyde de réticulation. Jusqu'à présent, de nombreux péroxydes utilisés ne permettent pas la préparation d'un câble par un procédé d'extrusion ou de coextrusion car la température pour une telle opération est souvent de l'ordre de 100 à 120°C, entraînant ainsi un thermodurcissement précoce de la formulation. Certains péroxydes organiques, en particulier les aralkyl-péroxydes tel que par exemple le péroxyde de dicumyle (péroxyde, bis (1-methyl-1-phényléthyle)) permettent d'effectuer cette opération d'extrusion ou de coextrusion sans un thermodurcissement précoce (« on parle de « grillage »). Cependant, l'utilisation d'un tel type de péroxyde présente le désavantage de dégager par décomposition thermique du catalyseur et en particulier dans le domaine de températures intéressant au point de vue industriel, des produits gazeux et très volatils qui donnent naissance à des défauts d'extrusion et des porosités dans l'élastomère silicone réticulé autour du matériau conducteur lors de la vulcanisation dans un « bain de sel ».

Les compositions polyorganosiloxanes comprenant des aralkyl-péroxydes et vulcanisables à chaud en élastomères silicones proposées jusqu'ici pour l'industrie du câble électrique ne sont pas totalement satisfaisantes notamment sur le plan de la préparation et de la mise en oeuvre de telles compositions dans un procédé de préparation d'un câble par extrusion (ou coextrusion) et vulcanisation dans un bain de sel.

Il existe donc un besoin important dans l'industrie du câble électrique de palier à ces problèmes de porosités lors de la mise en oeuvre d'une composition silicone vulcanisable à chaud et catalysée par des aralkyl-péroxydes, tel que par exemple le péroxyde de dicumyle, dans un procédé de vulcanisation utilisant un bain de sel.

Un but de la présente invention est la mise au point de compositions polyorganosiloxanes vulcanisables à chaud qui, tout en possédant une bonne tenue à la combustion, possèdent de bonnes propriétés mécaniques à l'état non recuit comme à l'état recuit qui ne présentent pas de dégradation lors de la préparation d'un câble électrique après extrusion (ou coextrusion avec un polymère thermoplastique) et vulcanisation dans un bain de sel. Par « dégradation » on entend des défauts d'extrusion et/ou des porosités dans l'élastomère silicone réticulé autour du matériau conducteur.

Il a maintenant été trouvé, et c'est ce qui constitue le premier objet de la présente invention, des compositions polyorganosiloxanes catalysée par des aralkyl-péroxydes, tel que par exemple le péroxyde de dicumyle et vulcanisables à chaud en élastomères silicones, utilisables notamment dans le domaine de la fabrication de fils ou câbles électriques ne présentant plus les problèmes de dégradation lors de la préparation d'un câble électrique par extrusion (ou coextrusion avec un polymère thermoplastique) et vulcanisation dans un bain de sel.

De plus ces compositions résultent en des élastomères silicones ayant de bonnes propriétés mécaniques et un bon comportement au feu et à l'opacité des fumées.

Plus précisément, la présente invention, prise dans son premier objet, concerne une composition polyorganosiloxane vulcanisable à chaud en élastomères silicone constituée de :
- 100 parties en poids d'au moins une gomme polyorganosiloxane (a) :
- de 15 à 100 parties de charge(s) de renforcement (b),
- de 0,2 à 8 parties d'un péroxyde organique aralkyle et de préférence le péroxyde de dicumyle,
- de 0,2 à 10 parties d'oxyde de zinc (d),
- de 0,1 à 15 parties d'oxyde de calcium (e)
- de 0 à 15 parties d'additif(s) auxilliaire(s) (f),
- de 0,0001 à 0,02 parties d'ingrédient (g) exprimé en poids de platine métal (élémentaire) (soit 10 ppm à 200 ppm),
- de 10 à 100 parties de charge(s) de bourrage (i), et
- de 0,5 à 10 parties d'espèce(s) (j) appartenant au groupe de la wollastonite.

Ainsi les compositions selon la présente invention comprennent au moins un polymère polyorganosiloxane (a) contenant de préférence de 0 à 4 %, et encore plus préférentiellement de 0,01 à 3 %, en poids, de groupement vinylé. Lorsque ces polymères polyorganosiloxanes (a) ont des viscosités à 25°C comprises entre 50.000 et 1.000.000 mPa.s, elles sont appelées huiles, mais leur viscosité peut être supérieure à 1.000.000 mPa.s et elles sont appelées alors des gommes. Dans les compositions selon la présente invention, les polymères polyorganosiloxanes peuvent être des huiles ou des gommes ou des mélanges. Ces polymères polyorganosiloxanes sont des polymères linéaires, dont la chaîne diorganopolysiloxanique est constituée essentiellement de motifs de formule R₂SiO. Cette chaîne est bloquée à chaque extrémité par un motif de formule R₃Si_{0.5} et/ou un radical de formule OR'. Dans ces formules :
- les symboles R, identiques ou différents, représentent des radicaux hydrocarbonés monovalents tels que des radicaux alkyles, par exemple, méthyle, éthyle, propyle, octyle, octadécyle, etc..., des radicaux aryle, par exemple phényle, tolyle, xylyle, etc ..., des radicaux aralkyle tels que benzyle, phényléthyle, etc ..., des radicaux cycloalkyle et cycloalkényle tels que des radicaux cyclohexyle, cycloheptyle, cyclohexényle, etc..., des radicaux alkényle, par exemple des radicaux vinyle, allyle, etc..., des radicaux alkaryle, des radicaux cyanoalkyle tels qu'un radical cyanoéthyle, etc ..., des radicaux halogénoalkyle, halogénoalkényle et halogénoaryle, tels que des radicaux chlorométhyle trifluor-3,3,3 propyle, chlorophényle, dibromophényle, trifluorométhylphényle,
- le symbole R' représente un atome d'hydrogène, un radical alkyle ayant de 1 à 4 atomes de carbone, le radical bétaméthoxy-éthyle.

De préférence, au moins 60 % des groupes R représentent des radicaux méthyle. La présence, le long de la chaîne diorganopolysiloxanique, de faibles quantités de motifs autres que R₂SiO, par exemple de motifs de formule RSiO_{1.5} et/ou SiO₂ n'est cependant pas exclue dans la proportion d'au plus 2 % (ces % exprimant le nombre des motifs T et/ou Q pour 100 atomes de silicium).

A titre d'exemples concrets de motifs de formules R₂SiO et R₃SiO_{0.5} et de radicaux de formule OR', peuvent être cités ceux de formules :
(CH₃)₂SiO, CH₃(CH₂=CH)SiO, CH₃(C₆H₅)SiO, (C6H₅)₂SiO,
CH₃(C₂H₅)SiO, (CH₃CH₂CH₂) CH₃SiO, CH₃(n.C₃H₇)SiO,
(CH₃)₃SiO_{0.5}, (CH₃)₂(CH₂=CH)SiO_{0.5}. CH₃(C₆H₅)₂SiO_{0.5},
CH₃(C₆H₅) (CH₂=CH)SiO_{0.5},
OH, -OCH₃, -OC₂H₅, -O-n. C₃H₇, -O-iso.C₃H₇, -O-n.C₄H₉,
-OCH₂CH₂OCH₃.

Ces huiles et gommes sont commercialisées par les fabricants de silicone ou peuvent être fabriquées en opérant selon des techniques déjà connues.

La charge de renforcement (b) consiste dans la silice, l'alumine ou un mélange de ces deux espèces. A titre de silice utilisables, on vise des charges caractérisées par une fine taille de particules souvent inférieure ou égale à 0,1 µm et un rapport élevé de la surface spécifique au poids, généralement compris dans l'intervalle d'environ 50 mètres carrés par gramme à plus de 300 mètres carrés par gramme. Les silices de ce type sont des produits disponibles dans le commerce et sont bien connues dans la technique de la fabrication des caoutchoucs de silicone. Ces silices peuvent être préparées par voie pyrogénique (silices dites de combustion ou de fumée) ou par des procédés humides (silices précipitées) et peuvent être traitées ou non traitées par des composés organosiliciques habituellement utilisées pour cet usage. La nature chimique et le procédé de préparation ne sont pas importants aux fins de la présente invention, pourvu que la silice soit capable d'exercer une action de renforcement dans l'élastomère fini. Bien entendu on peut utiliser aussi des coupages de différentes silices. A titre d'alumine de renforcement utilisable, on emploie avantageusement une alumine hautement dispersible, dopée ou non de manière connue. Bien entendu, on peut utiliser aussi des coupages de différentes alumines. Comme exemples non limitatifs de pareilles alumines, on citera les alumines A 125, CR 125, D 65CR de la société BAÏKOWSKI. De préférence, la charge de renforcement utilisée est une silice de combustion, prise seule ou en mélange avec de l'alumine.

Pour le péroxyde organique aralkyle (c) il peut ainsi s'agi, par exemple, du péroxyde de ditertiobutyle ou du péroxyde de dicumyle.

Selon un mode préférentiel le péroxyde organique aralkyle (c) est le péroxyde de dicumyle.

Le choix du péroxyde organique aralkyle (c) dépendra en pratique du procédé employé pour durcir l'élastomère.

L'oxyde de zinc qui constitue l'ingrédient (d) des compositions selon la présente invention est une poudre blanche ou légèrement jaunâtre.

Le platine, ingrédient (g), peut être : sous forme de platine métallique (élémentaire); ou sous forme notamment d'acide chloroplatinique (par exemple l'acide hexachloroplatinique H₂PtCl₆); ou sous forme de complexes du platine et de produits organiques : comme notamment les complexes du platine et d'organosiloxanes vinylés (par exemple le complexe de Karstedt), les complexes tels que ceux de formule (PtCl2, oléfine)₂ et H(PtCl₃, oléfine) où l'oléfine représente l'éthylène, le propylène, le butylène, le cyclohexène ou le styrène, les complexes de chlorure de platine et de cyclopropane.

La charge de bourrage (i) est le plus généralement une silice cristalline. Pareille charge présente souvent une taille de particules supérieure à 0,1 µm. Ces charges (i) sont représentées plus spécialement par le quartz broyé et les silices de diatomées. Bien entendu, on peut utiliser aussi des coupages de différentes silices cristallines. De préférence, la charge de bourrage (i) est du quartz broyé.

Les compositions selon la présente invention contiennent encore, à titre d'ingrédient obligatoire, au moins une espèce minérale (j) appartenant au groupe de la wollastonite. Le groupe de la wollastonite comprend les espèces minérales suivantes : le métasilicate de calcium (CaSiO₃) ou wollastonite ; le métasilicate mixte de calcium et de sodium (NaCa₂HSi₃O₉) ou pectolite ; et le métasilicate mixte de calcium et de manganèse [CaMn(SiO₃)₂] ou bustamite. Bien entendu on peut utiliser un mélange de ces différentes espèces. De préférence, l'ingrédient (j) utilisé est une wollastonite. La wollastonite existe sous deux formes : la wollastonite elle-même, que les chimistes désignent par α-CaSiO₃, que l'on trouve couramment à l'état naturel ; et la pseudo-wollastonite ou β-CaSiO₃. De manière plus préférentielle, on utilise la wollastonite α-CaSiO₃.

En plus des ingrédients obligatoires (a), (b), (c), (d), (e), (g), (i) et (j) spécifiés ci-avant, les compositions selon la présente invention peuvent contenir éventuellement en outre un ou plusieurs additif(s) auxilliaire(s) (f) tel(s) que notamment: au moins un produit dit "antistructure" (f1) ; et/ou au moins une résine polysiloxane (f2) ; et/ou au moins un agent de stabilisation (f3); et/ou au moins un agent de couplage (f4); et/ou au moins un pigment (f5) pour fabriquer des fils et des câbles colorés et/ou au moins un composé à base de bore (f6).

Pour la préparation des compositions selon l'invention, les divers ingrédients sont intimement mélangés au moyen des dispositifs bien connus dans l'industrie des élastomères silicones, l'ordre d'incorportation pouvant être quelconque. Il est toutefois avantageux de disperser dans un premier temps, dans le (ou les) polyorganosiloxane(s) (a), dans l'ordre par exemple donné ci-après, les ingrédients constitutifs : possible(s) additif(s) (f3) et (f6), puis charge(s) de bourrage (i), puis espèce(s) du groupe de la wollastonite (j), puis oxyde de zinc (d), puis ingrédient (g) à base de Pt, puis possible(s) additif(s) (f1), (f2) et (f4), puis charge(s) de renforcement (b) en plusieurs fois; à ce mélange on ajoute ensuite la quantité désirée de catalyseur (c) et le possible additif (f5).

En outre l'invention, dans un second objet, porte sur l'utilisation des compositions polyorganosiloxanes qui viennent d'être décrites pour la réalisation, notamment, des enveloppes ou isolants primaires des monoconducteurs entrant dans la constitution des fils ou câbles électriques protégés contre l'incendie.

L'invention porte dans un troisième objet sur un élastomère silicone susceptible d'être obtenu par réticulation d'une composition polyorganosiloxane vulcanisable à chaud selon l'invention et telle que définie ci-dessus.

Dans son dernier objet, l'invention porte sur l'utilisation d'une composition selon l'invention telle que définie ci-dessus pour la réalisation d'enveloppe ou isolant primaire de monoconducteur(s) entrant dans la constitution de fils ou câbles électriques protégés contre l'incendie, qui consiste à opérer le dépôt de ladite composition autour de chaque monoconducteur, de l'extruder ou de le coextruder avec un polymère thermoplastique puis à le faire réticuler en élastomère silicone dans un bain de sel à une température matière allant de 100°C à 200°C.

Dans le cadre de pareille utilisation, le dépôt d'une composition selon l'invention autour de chaque monoconducteur peut s'effectuer selon les procédés usuels, notamment par des procédés d'extrusion. Le dépôt ainsi obtenu est ensuite réticulé par chauffage dans un bain de sel pour conduire à la formation de l'isolant primaire en élastomère silicone. La durée du chauffage varie évidemment avec la température de la matière. Elle est généralement de l'ordre de quelques à plusieurs minutes vers 100°C - 120°C et de quelques secondes vers 180 - 200°C. Il est possible de déposer plusieurs couches conjointement à l'aide d'une extrusion en tandem équipée par exemple d'une tête d'équerre ou d'une co-extrusion.

D'autres détails ou avantages de l'invention apparaîtront plus clairement au vu des exemples donnés ci-dessous uniquement à titre indicatif.

### EXEMPLE 1 et EXEMPLE COMPARATIF A :

1) Exemple Comparatif A (demande de brevet EP 1238014):
   Dans un pétrin malaxeur à bras en Z, on mélange pendant 2 heures à température ambiante (23°C) :
      - 33,0 parties d'un polyorganosiloxane a) qui est un poly(diméthyl)(méthylvinyl)-siloxane bloqué à chacune de ses deux extrémités par un motif triméthylsiloxy, contenant dans la chaîne 720 ppm de groupes Vi, ayant une viscosité de 20 millions de mPa.s à 25°C ;
      - 67,0 parties d'un polyorganosiloxane a) qui est un polydiméthylsiloxane bloqué à chacune de ses deux extrémités par un motif diméthylvinylsiloxy, contenant 120 ppm de groupes Vi ayant une viscosité de 20 millions de mPa.s à 25°C ;
      - 0,27 parties d'oxyde de calcium f3) ;
      - 0,049 parties d'octoate de fer f3) ;
      - 2,96 parties de Ce(OH)₄ f3) ;
      - 79,1 parties de quartz broyé i), commercialisé par la Société SIFRACO (Paris, France) sous la dénomination E600 ;
      - 3,30 parties de wollastonite α-CaSiO3 j) ;
      - 9,95 parties de mica de type muscovite d) ;
      - 4,85 parties d'oxyde zinc e) ;
      - 0,0061 parties de platine métal g), apporté sous la forme d'une solution dans le divinyltétraméthyldisiloxane d'un complexe du platine à 10 % en poids de platine ligandé par du divinyltétraméthyldisiloxane (complexe de Karstedt) ;
      - 3,64 parties de TiO₂ de combustion h) ;
      - 2,91 parties d'une huile polydiméthylsiloxane f1) bloquée à ses deux extrémités par des motifs diméthylhydroxysiloxy, contenant 9 % en poids d'OH, de viscosité 50 mPa.s à 25°C ;
      - 1,70 parties d'une huile d'huile poly(méthyvinyl)siloxane f1) bloquée à ses deux extrémités par des motifs méthylvinylhydroxysiloxy, contenant 9 % en poids d'OH et, dans la chaîne, 3 % en poids de groupes Vi, de viscosité 25 mPa.s à 25°C ;
      - 18,44 parties de silice de combustion traitée D4 (octaméthylcyclotétrasiloxane) b) de surface spécifique de 200 m²/g ;
      - 14,56 parties de silice de combustion b) de surface spécifique de 150 m²/g.
   Le mélange obtenu ci-avant est alors travaillé sur un malaxeur à 2 cylindres et on lui ajoute :
      - 3 parties de péroxyde de 2,4-dichlorobenzoyle c).
(2i) Une fraction de la masse homogène obtenue sur le malaxeur est mise en oeuvre pour la fabrication d'un câble électrique. La fabrication du câble est une construction standard consistant à réaliser un câble comprenant un monoconducteur en cuivre autour duquel est coextrudé une enveloppe ou isolant primaire en élastomère silicone+ un polymère thermoplastique qui est ensuite vulcanisé dans un bain de sel selon un mode opératoire connu de l'homme du métier.

Le câble obtenu présente des porosités ainsi que des défauts d'extrusion.
2) Composition selon l'invention (toutes les parties sont données en poids) :
   Dans un pétrin malaxeur à bras en Z, on mélange pendant 2 heures à température ambiante (23°C) pour 100 parties en poids de composition:
      - 45,08 parties en poids d'un polyorganosiloxane (a1) qui est un poly(diméthyl)(méthylvinyl)-siloxane bloqué à chacune de ses deux extrémités par un motif triméthylsiloxy, contenant dans la chaîne 360 ppm de groupes vinyle, ayant une viscosité de 20 millions de mPa.s à 25°C ;
      - 4,53 parties d'un polyorganosiloxane (a2) qui est un polydiméthylsiloxane bloqué à chacune de ses deux extrémités par un motif diméthylvinylsiloxy, contenant 120 ppm de groupes Vi ayant une viscosité de 20 millions de mPa.s à 25°C ;
      - 3,03 parties d'oxyde de calcium (e) ;
      - 0,018 partie d'octoate de fer (f3) ;
      - 17,65 parties de quartz broyé (i), commercialisé par la Société SIFRACO (Paris, France) sous la dénomination E600 ;
      - 2,26 parties de wollastonite α-CaSiO3 (j) ;
      - 1,81 parties d'oxyde zinc (d) ;
      - 0,68 *parties* d'une solution de divinyltétraméthyldisiloxane + d'un complexe du platine à 10 % en poids de platine ligandé par du divinyltétraméthyldisiloxane (complexe de Karstedt), équivalent à 0,001 parties de platine métal (g),
      - 1,76 parties d'une huile polydiméthylsiloxane (f1) bloquée à ses deux extrémités par des motifs diméthylhydroxysiloxy, contenant 9 % en poids d'OH, de viscosité 50 mPa.s à 25°C ;
      - 1,32 parties d'une huile poly(méthylvinyl)siloxane (f2) bloquée à ses deux extrémités par des motifs méthylvinylhydroxysiloxy, contenant 9 % en poids d'OH et, dans la chaîne, 3 % en poids de groupes Vi, de viscosité 25 mPa.s à 25°C ;
      - 13,68 parties de silice de combustion traitée D4 (octaméthylcyclotétrasiloxane) (b1) de surface spécifique de 200 m²/g ;
      - 7,08 parties de silice de combustion (b2) de surface spécifique de 150 m²/g.
   Le mélange obtenu ci-avant est alors travaillé sur un malaxeur à 2 cylindres et on lui ajoute :
      - 1,1 partie de Perkadox-BC-FF^{Ⓡ} (péroxyde de dicumyle ou péroxide, bis ( 1-methyl-1-phényléthyl).
3. Caractérisation de la composition :
   (i) Une fraction de la masse homogène obtenue sur le malaxeur est utilisée pour mesurer les propriétés mécaniques de l'élastomère silicone résultant de la vulcanisation à chaud de la composition polyorganosiloxane. Pour ce faire, la fraction de masse homogène retenue à cet effet est alors vulcanisée pendant 8 minutes à 115°C, en opérant dans un moule approprié permettant d'obtenir des plaques de 2 mm d'épaisseur. On obtient ainsi des plaques à l'état non recuit (NR). On soumet ensuite une fraction des plaques à un recuit de 4h à 200°C et un vieillissement de 10 jours à 200°C. On prélève ensuite dans l'ensemble de ces plaques des échantillons normalisés et mesure les propriétés suivantes :
      - dureté Shore A (DSA) selon la norme DIN 53505,
      - résistance à la rupture (R/R) en MPa selon la norme AFNOR NF T 46002,
      - allongement à la rupture (A/R) en % selon la norme précédente,
      - module élastique (ME) à 100 % en Mpa selon la norme précédente.

Les résultats sont consignés dans le Tableau 1 suivant :

**Tableau 1**

| | Initial | Recuit 4h à 200°C | Vieillissement 10j à 200°C |
|---|---|---|---|
| DSA | 68 | 70 | 73 |
| R/R (Mpa) | 7,7 | 7,8 | 7 |
| A/R (%) | 270 | 244 | 197 |
| ME (Mpa) | 3,1 | 3,5 | 4,1 |

(2i) Une autre fraction de la masse homogène obtenue sur le malaxeur est mise en oeuvre pour la fabrication d'un câble électrique. La fabrication du câble est une construction standard consistant à réaliser un câble comprenant un monoconducteur en cuivre autour duquel est coextrudé une enveloppe ou isolant primaire en élastomère silicone+ polymère thermoplastique qui est ensuite vulcanisé dans un bain de sel selon un mode opératoire connu de l'homme du métier.

Le câble obtenu est sans porosité, ne présente aucun défaut d'extrusion, satisfait la norme feu IEC 60331 ainsi que celles sur l'opacité des fumées (IEC 61034 et BS 7622). De plus la composition silicone et l'isolant silicone satisfont la norme NFC 32102 concernant les propriétés mécaniques avant et après vieillissement 10 jours à 200°C.

## Revendications

1. Composition polyorganosiloxane vulcanisable à chaud en élastomères silicone constituée de :
- 100 parties en poids d'au moins une gomme polyorganosiloxane (a) :
- de 15 à 100 parties de charge(s) de renforcement (b),
- de 0,2 à 8 parties d'un péroxyde organique (c), de préférence un péroxyde organique aralkyle et encore plus préférentiellement le péroxyde de dicumyle,
- de 0,2 à 10 parties d'oxyde de zinc (d),
- de 0,1 à 15 parties d'oxyde de calcium (e)
- de 0 à 15 parties d'additif(s) auxilliaire(s) (f),
- de 0,0001 à 0,02 parties d'ingrédient (g) exprimé en poids de platine métal (élémentaire) (soit 10 ppm à 200 ppm),
- de 10 à 100 parties de charge(s) de bourrage (i), et
- de 0,5 à 10 parties d'espèce(s) (j) appartenant au groupe de la wollastonite.

2. Compositions selon la revendication 1 **caractérisées en ce que** l'ingrédient (a) consiste dans au moins un polymère polyorganosiloxane contenant de 0 à 4 % en poids de groupes vinyles et possédant une viscosité supérieure à 1 million de mPa.s à 25°C.

3. Compositions selon l'une quelconque des revendications 1 à 2, **caractérisées en ce que** l'ingrédient (b) consiste dans la silice, l'alumine ou un mélange de ces deux espèces.

4. Compositions selon l'une quelconque des revendications 1 à 3, **caractérisées en ce que** l'ingrédient (i) consiste dans au moins une silice cristalline.

5. Compositions selon l'une quelconque des revendications 1 à 4, **caractérisées en ce que** l'ingrédient (j) consiste dans au moins une espèce choisie parmi : le métasilicate de calcium (CaSiO3) ou wollastonite ; le métasilicate mixte de calcium et de sodium (NaCa₂HSi₃O₉) ou pectolite ; et le métasilicate mixte de calcium et de manganèse [CaMn(SiO₃)_{2]} ou bustamite.

6. Compositions selon l'une quelconque des revendications 1 à 5 **caractérisées en ce que** l'ingrédient facultatif (f), quand on en utilise un, consiste dans : au moins un produit dit "antistructure" (f1) ; et/ou au moins une résine polysiloxane f2) ; et/ou au moins un agent de stabilisation f3) ; et/ou au moins un agent de couplage f4) ; et/ou au moins un pigment coloré f5) ; et/ou au moins un composé à base de bore f6).

7. Elastomère silicone susceptible d'être obtenu par réticulation d'une composition polyorganosiloxane vulcanisable à chaud telle que définie selon l'une quelconque des revendications 1 à 6.

8. Utilisation d'une composition selon l'une quelconque des revendications 1 à 6 pour la réalisation d'enveloppe ou isolant primaire de monoconducteur(s) entrant dans la constitution de fils ou câbles électriques protégés contre l'incendie, qui consiste à opérer le dépôt de ladite composition autour de chaque monoconducteur, de l'extruder ou de le coextruder avec un polymère thermoplastique puis à le faire réticuler en élastomère silicone dans un bain de sel à une température matière allant de 100°C à 200°C.

## Claims

1. Polyorganosiloxane composition which can be vulcanized at high temperature to silicone elastomers and is composed of:
- 100 parts by weight of at least one gum polyorganosiloxane gum (a),
- from 15 to 100 parts of reinforcing filler(s) (b),
- from 0.2 to 8 parts of an organic peroxide (c), preferably an organic aralkyl peroxide and more preferably dicumyl peroxide,
- from 0.2 to 10 parts of zinc oxide (d),
- from 0.1 to 15 parts of calcium oxide (e)
- from 0 to 15 parts of auxiliary additive(s) (f),
- from 0.0001 to 0.02 parts of ingredient (g), expressed by weight of (elemental) platinum metal (i.e., 10 ppm to 200 ppm),
- from 10 to 100 parts of bulking filler(s) (i), and
- from 0.5 to 10 parts of one or more species (j) belonging to the wollastonite group.

2. Composition according to Claim 1, **characterized in that** ingredient (a) consists of at least one polyorganosiloxane polymer containing from 0 to 4% by weight of vinyl groups and possessing a viscosity of greater than 1 million mPa.s at 25°C.

3. Composition according to either of Claims 1 and 2, **characterized in that** ingredient (b) consists of silica, alumina or a mixture of these two species.

4. Composition according to any one of Claims 1 to 3, **characterized in that** ingredient (i) consists of at least one crystalline silica.

5. Composition according to any one of Claims 1 to 4, **characterized in that** ingredient (j) consists of at least one species selected from: calcium metasilicate (CaSiO₃) or wollastonite; mixed calcium sodium metasilicate (NaCa₂HSi₃O₉) or pectolite; and mixed calcium manganese metasilicate [CaMn(SiO₃)₂] or bustamite.

6. Composition according to any one of Claims 1 to 5, **characterized in that** optional ingredient (f), when one is used, consists of: at least one "antistructuring" product (f1); and/or at least one polysiloxane resin f2); and/or at least one stabilizing agent f3); and/or at least one coupling agent f4); and/or at least one colored pigment f5); and/or at least one boron-based compound f6).

7. Silicone elastomer obtainable by crosslinking a polyorganosiloxane composition which can be vulcanized at high temperature as defined according to any one of Claims 1 to 6.

8. Use of a composition according to any one of Claims 1 to 6, for the production of the sheath or primary insulation of one or more single conductors used in the construction of fire-protected electrical wires or cables, which consists in depositing said composition around each single conductor, in extruding or coextruding it with a thermoplastic polymer and then in crosslinking it to a silicone elastomer in a salt bath at a substance temperature ranging from 100°C to 200°C.

## Patentansprüche

1. Polyorganosiloxanzusammensetzung, die zu einem Silikonelastomer heißvulkanisiert werden kann, bestehend aus:
- 100 Gewichtsteilen mindestens eines Polyorganosiloxangummis (a),
- 15 bis 100 Teilen eines oder mehrerer verstärkender Füllstoffe (b),
- 0,2 bis 8 Teilen eines organischen Peroxids (c), vorzugsweise eines organischen Aralkylperoxids und noch weiter bevorzugt Dicumylperoxid,
- 0,2 bis 10 Teilen Zinkoxid (d),
- 0,1 bis 15 Teilen Calciumoxid (e),
- 0 bis 15 Teilen Hilfsadditiv(e) (f),
- 0,0001 bis 0,02 Teilen Bestandteil (g), ausgedrückt in Gewicht von (elementarem) Platinmetall (d.h. 10 ppm bis 200 ppm),
- 10 bis 100 Teilen eines oder mehrerer streckender Füllstoffe (i),
- 0,5 bis 10 Teilen Spezies (j) aus der Wollastonit-Gruppe.

2. Zusammensetzung nach Anspruch 1, **dadurch gekennzeichnet, daß** der Bestandteil (a) aus mindestens einem Polyorganosiloxanpolymer mit 0 bis 4 Gew.-% Vinylgruppen und einer Viskosität von mehr als 1 Million mPa.s bei 25°C besteht.

3. Zusammensetzung nach Anspruch 1 oder 2, **dadurch gekennzeichnet, daß** der Bestandteil (b) aus Siliciumoxid, Aluminiumoxid oder einer Mischung dieser beiden Spezies besteht.

4. Zusammensetzung nach einem der Ansprüche 1 bis 3, **dadurch gekennzeichnet, daß** der Bestandteil (i) aus mindestens einem kristallinen Siliciumoxid besteht.

5. Zusammensetzung nach einem der Ansprüche 1 bis 4, **dadurch gekennzeichnet, daß** der Bestandteil (j) aus mindestens einer unter Calciummetasilicat (CaSiO₃) bzw. Wollastonit; gemischtem Calciumnatriummetasilicat (NaCa₂HSi₃O₉) bzw. Pectolith und gemischtem Calciummanganmetasilicat [CaMn(SiO₃)₂] bzw. Bustamit ausgewählten Spezies besteht.

6. Zusammensetzung nach einem der Ansprüche 1 bis 5, **dadurch gekennzeichnet, daß** der fakultative Bestandteil (f), wenn er verwendet wird, aus mindestens einem "Antistruktur"-Produkt f1) und/oder mindestens einem Polysiloxanharz f2) und/oder mindestens einem Stabilisierungsmittel f3) und/oder mindestens einem Haftvermittler f4) und/oder mindestens einem Farbpigment f5) und/oder mindestens einer Verbindung auf Basis von Bor f6) besteht.

7. Silikonelastomer, das durch Vernetzung einer heißvulkanisierbaren Polyorganosiloxanzusammensetzung nach einem der Ansprüche 1 bis 6 erhältlich ist.

8. Verwendung einer Zusammensetzung nach einem der Ansprüche 1 bis 6 zur Herstellung einer Umhüllung oder Primärisolierung eines oder mehrerer einadriger Leiter, die beim Aufbau von brandgeschützten elektrischen Drähten oder Kabeln verwendet werden, bei dem man die Zusammensetzung um jeden einadrigen Leiter aufbringt, indem man sie extrudiert oder mit einem thermoplastischen Polymer coextrudiert, und dann in einem Salzbad bei einer Materialtemperatur von 100°C bis 200°C zu einem Silikonelastomer vernetzt.
